# EUROPÄISCHE PATENTANMELDUNG

(11) **EP 0 696 858 A1**
(43) Veröffentlichungstag der Anmeldung: **14.02.1996**
(21) Anmeldenummer: 95112215.9
(22) Anmeldetag: 03.08.1995
(51) Int. Cl.: H04B 10/10, G02B 5/20, H04J 14/02

(54) **Leitungsungebundenes optisches Übertragungssystem mit voneinander unäbhängigen optischen Übertragungsstrecken**

(30) Priorität: 09.08.1994 AT 1551/94
(71) Anmelder: Siemens Aktiengesellschaft Österreich, A-1210 Wien (AT)
(72) Erfinder: Danzer, Hermann, A-3400 Weidling (AT); Lasser, Othmar, A-1140 Wien (AT)
(74) Vertreter: Fuchs, Franz-Josef, Dr.-Ing.

(57) **Zusammenfassung**

Es wird ein Übertragungssystem mit zumindest zwei voneinander unabhängigen optischen Übertragungsstrecken (I, II, III) angegeben, bei dem durch geeignete Auswahl der optischen Elemente (12, 32, 52 bzw. 21, 41, 61) und den Einsatz von Halbleiterfiltern (23, 43, 63) die Übertragungsstrecken voneinander entkoppelt werden. Das System eignet sich besonders für Infrarot-Konferenzanlagen

## Beschreibung

Die Erfindung betrifft ein Übertragungssystem mit zumindest zwei voneinander unabhängigen optischen Übertragungsstrecken, welche jeweils zumindest eine Sendeeinrichtung und eine Empfangseinrichtung umfassen.

Derartige Übertragungssysteme, die vorwiegend im Infrarotbereich arbeiten, werden beispielsweise in Konferenzsälen zur voneinander unabhängigen Übertragung von Audio- und Datensignalen verwendet. Ein weiterer bedeutsamer Anwendungsbereich ist die Übertragung von Datensignalen zwischen verschiedenen Rechnerkomponenten.

Ein grundlegendes Problem derartiger Übertragungsanlagen ist die Entkopplung der Übertragungsstrecken. Diese wird bei bekannten Übertragungssystemen dadurch erreicht, daß bei Trägerfrequenzübertragung unterschiedliche Trägerfrequenzen verwendet werden, oder bei Impulsübertragungsverfahren die Übertragungsstrecken zueinander korreliert senden. Bei den genannten Verfahren ist jedoch keine vollständige Unabhängigkeit der Übertragungsstrecken voneinander gegeben.

Der Erfindung liegt die Aufgabe zugrunde, ein Übertragungssystem anzugeben, bei dem sich die Übertragungsstrecken gegenseitig nicht beeinflussen.

Dies geschieht erfindungsgemäß mit einem Übertragungssystem nach Anspruch 1.

Beim erfindungsgemäßen Übertragungssystem sind die elektrischen Komponenten der Übertragungsstrecken identisch, wodurch kostengünstige Herstellung möglich ist. Neben der Entkopplung der Übertragungsstrecken wird mit der Erfindung überdies eine Verbesserung der Störeigenschaften der Übertragungsstrecken erzielt, da mit den verwendeten Halbleiterfiltern auch Umlichtstörungen unterdrückt werden.

Vorteilhafte Ausgestaltungen der Erfindung ergeben sich aus den Ansprüchen 2 bis 6.
Ein Übertragungswellenlängenbereich von 950 nm ist dabei deswegen günstig, weil für diesen Bereich Standardbauelemente eingesetzt werden können. Freiraum-Laserdioden sind gegenüber herkömmlichen LED-Dioden höher modulierbar, haben einen geringeren Energiebedarf und senden mit geringerer Bandbreite. Eine linsenförmige Ausgestaltung der Halbleiterfilter ermöglicht geringere Abmessungen und damit Materialeinsparungen.

Die Erfindung wird anhand einer Figur näher erläutert, welche beispielhaft ein Übertragungssystem mit 3 voneinander unabhängigen Übertragungsstrecken zeigt.

Die erste Übertragungsstrecke I umfaßt eine Sendeeinrichtung 1, welche eine Steuereinheit 11 und mindestens eine Sendediode 12 enthält, sowie eine Empfangseinrichtung 2, welche mindestens eine Empfangsdiode 21 und eine nachgeschaltete Verstärker- und Auswerteeinheit 22 enthält. Der Übertragungsstrecke ist eine Wellenlänge λ₁ zugeordnet.

Der Empfangsdiode 21 ist ein Halbleiterfilter 23 in Form eines Plättchens vorgelagert, es wirkt als optischer Langpaß mit einer Grenzwellenlänge λ₁ derart, daß es für λ₁ und größere Wellenlängen durchlässig ist, für Wellenlängen kleiner λ₁ aber als Absorber wirkt.

Völlig gleichartig zur ersten Übertragungsstrecke I sind die zweite und die dritte Übertragungsstrecke II, III aufgebaut, mit jeweils einer Sendeeinrichtung 3, 5 bestehend aus einer Steuereinheit 31, 51 und mindestens einer Sendediode 32, 52, sowie einer Empfangseinrichtung 4, 6, bestehend aus jeweils mindestens einer Empfangsdiode 41, 61 und einer nachgeschalteten Verstärker- und Auswerteeinheit 42, 62.

Den Übertragungsstrecken sind die Wellenlängen λ₂ und λ₃ zugeordnet, wobei sich die drei unterschiedlichen Wellenlängen der drei Übertragungsstrecken wie folgt zueinander verhalten: λ₁ < λ₂ < λ₃ .

Die in die Übertragungsstrecken eingefügten Halbleiterfilter 21, 41, 61 sind so ausgeführt, daß ihre Grenzwellenlänge jeweils kleiner ist, als die Wellenlänge der zugehörigen Übertragungsstrecke, aber größer als die nächstniedrigere, einer Übertragungsstrecke zugeordnete Wellenlänge. Das Halbleiterfilter der Übertragungsstrecke II , welcher die Wellenlänge λ₂ zugeordnet ist, hat also eine Grenzwellenlänge λ_{G2} für die gilt: λ₂ > λ_{G2} > λ₁.

Beim Ausführungsbeispiel wurde als Wellenlänge für die erste Übertragungsstrecke λ₁ = 950 nm gewählt, als Empfangsdioden werden für die erste Übertragungsstrecke Silizium-Empfangsdioden mit einer Empfangsbandbreite von ca. 800 nm bis 1200 nm verwendet werden.

Zur Unterdrückung von Umlichtstörungen ist auch in die erste Übertragungsstrecke ein Halbleiterfilter aus Galliumarsenid mit einer Grenzwellenlänge von ca. 900 nm eingefügt.

Die Wellenlänge der zweiten Übertragungsstrecke wurde mit λ₂ = 1300 nm festgesetzt. Das zugehörige Halbleiterfilter 41 ist aus Silizium aufgebaut, es weist eine Grenzwellenlänge von 1200 nm auf und unterdrückt daher die Signale der ersten Übertragungsstrecke. Aufgrund der bereits angeführten, nur begrenzten Bandbreite der Empfangsdioden der ersten Übertragungsstrecke stören Signale der zweiten Übertragungsstrecke die erste Übertragungsstrecke nicht.

Als Material für die Empfangsdioden 41 dient ein ternärer oder quaternärer Verbindungshalbleiter dessen Empfang auf Wellenlängen < 1400 nm beschränkt ist.

Die Wellenlänge der dritten Übertragungsstrecke wurde mit λ₃ = 1550 nm festgesetzt. Das zugehörige Halbleiterfilter 61 ist aus einem ternären oder quaternären Verbindungshalbleiter aufgebaut, es weist eine Grenzwellenlänge von 1400 nm auf und unterdrückt somit die Signale der beiden anderen Übertragungsstrecken.

Als Material für die Empfangsdioden 61 dient ebenfalls ein ternärer oder quaternärer Verbindungshalbleiter, der allerdings für den Empfang von Wellenlängen um 1550 nm ausgelegt ist.

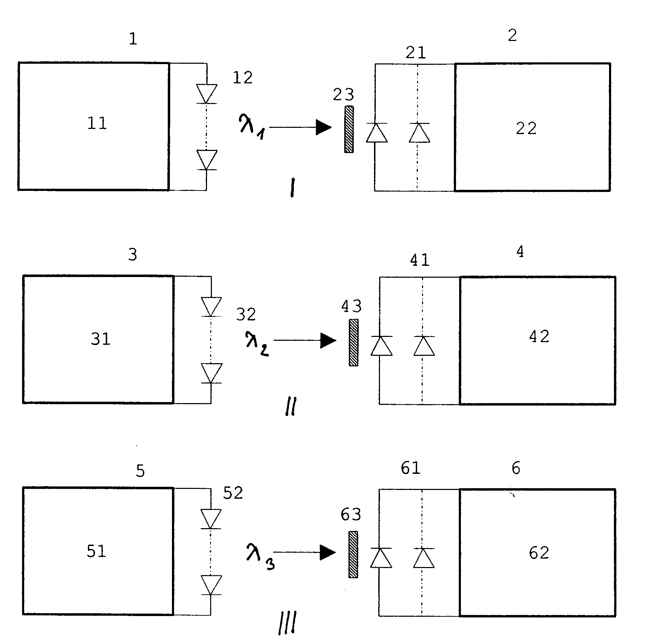

## Patentansprüche

1. Übertragungssystem mit zumindest zwei voneinander unabhängigen optischen Übertragungsstrecken, welche jeweils zumindest eine Sendeeinrichtung und eine Empfangseinrichtung umfassen, **dadurch gekennzeichnet,** daß die Übertragungsstrecken Licht verschiedener Wellenlänge führen und daß vor jeder Empfangseinrichtung (2, 4, 6) ein als optischer Langpaß wirkendes Halbleiterfilter (23, 43, 63) angeordnet ist, sodaß aufgrund der wellenlängenselektiven Empfangseigenschaften und der Filterwirkung des Halbleiterfilters (23, 43, 63) jede Empfangseinrichtung (2, 4, 6) im wesentlichen nur Licht der jeweils zugeordneten Wellenlänge erfaßt.

2. Übertragungssystem nach Anspruch 1, **dadurch gekennzeichnet,** daß die einer Übertragungsstrecke zugeordnete Wellenlänge annähernd 950 nm beträgt, und daß das dieser Übertragungsstrecke zugeordnete Halbleiterfilter (23, 43, 63) eine Grenzwellenlänge von annähernd 900 nm aufweist.

3. Übertragungssystem nach Anspruch 2, **dadurch gekennzeichnet,** daß das zugeordnete Halbleiterfilter (23, 43, 63) aus Galliumarsenid oder Indiumphosphat aufgebaut ist.

4. Übertragungssystem nach einem derAnsprüche 1 bis 3, **dadurch gekennzeichnet,** daß jede Empfangseinrichtung (2, 4, 6) zumindest eine Empfangsdiode (21, 41, 61) umfaßt, und daß die Empfangsdioden einer Übertragungsstrecke und die Halbleiterfilter (23, 43, 63) einer anderen Übertragungsstrecke aus dem selben Halbleitermaterial aufgebaut sind.

5. Übertragungssystem nach einem der Ansprüche 1 bis 4, **dadurch gekennzeichnet,** daß die Sendeeinrichtungen jeweils zumindest eine Freiraum-Laserdiode umfassen.

6. Übertragungssystem nach einem der Ansprüche 2 bis 5, **dadurch gekennzeichnet,** daß die Halbleiterfilter (23, 43, 63) linsenförmig ausgebildet sind.
